# EUROPEAN PATENT SPECIFICATION

(11) **EP 2 508 364 B1**
(45) Date of publication and mention of the grant of the patent: **18.02.2015**
(21) Application number: 12002442.7
(22) Date of filing: 04.04.2012
(51) Int. Cl.: B60C 23/04

(54) **Improvements in or relating to micro-power systems for a self-powered monitoring sensor**
Verbesserungen an oder im Zusammenhang mit Mikrostromsystemen für einen energetisch autarken Überwachungssensor
Améliorations de ou associées à des systèmes micro-puissance pour un capteur de surveillance auto-alimenté en énergie.

(30) Priority: 06.04.2011 US 201161472573 P
(43) Date of publication of application: 10.10.2012
(73) Proprietor: Stichting IMEC Nederland, 5656 AE Eindhoven (NL)
(72) Inventor: Pop, Valer, 3001 Leuven (BE); Visser, Hubregt Jannis, 3001 Leuven (BE); van Schaijk, Rob, 5658 BH Eindhoven (NL)
(74) Representative: Sarlet, Steven Renaat Irène

(56) References cited:
- WO-A2-2006/072539
- WO-A2-2007/127106
- US-A- 4 717 905
- US-A1- 2005 017 602
- US-A1- 2009 256 361

## Description

### Field of the Invention

The present invention relates to improvements in or relating to micro-power systems, and is more particularly, although not exclusively, concerned with micro-power systems that are used to provide electrical power to wireless and self-powered monitoring sensor devices, for example, tyre pressure monitoring systems.

### Background to the Invention

Monitoring sensors are commonly employed in many applications to measure a set of specific parameters, such as, pressure, temperature, strain, etc, in a location of interest. Depending on the particular application, the requirements regarding the delivery of the system power to the sensor and data transfer from the sensor can vary. Conventionally, system power and data transfer can be implemented using legacy wiring. However, given the complexity and cost of wiring, wireless and, preferably, self-powered monitoring sensors are preferred.

One particular application of interest is the in the field of automotive technology, for example, as part of an autonomous tyre pressure monitoring system (TPMS) or "intelligent tyre" sensor system which has extra functionality besides the traditional measurement of pressure and temperature, for example, acceleration, forces, etc., acting on or applied to the tyre. In this case, the TPMS must be completely self-powered, since legacy wiring cannot be used. This is achieved, by using a battery to power up the entire system. However, the battery in the TPMS effectively needs to be replaced at certain intervals, and such replacement is not always desirable due to the amount of effort involved in dismounting the whole system. In addition, battery-powered systems suffer from reliability problems, which can be exacerbated by the forces applied to the tyre while in motion. Moreover, the monitoring sensor needs to be able to transmit the data acquired wirelessly to the mainframe of the system.

Several wireless and battery-less systems are available in the state-of-the-art for tyre pressure monitoring systems. One wireless and battery-less sensor device is described in US-A-2009/0303076. The wireless sensor device contains a self-powered sensor and a radio frequency transmitter. The sensor utilizes a vibration energy harvesting module to power the sensor. A radio frequency energy harvester is used to power the radio frequency transmitter for backscatter modulation data communication.

In KR-A-2006095697, a surface acoustic wave (SAW) based passive radio sensing system using piezoelectric power and wireless power transmission is provided to semi-permanently detect a tyre pressure in real time by using piezoelectric power and wireless power transmission. In US-A-2011/0012723, a system mounted in the tyre for monitoring TPMS that discloses a battery, a fuel cell, a radiation source, a super-capacitor, a piezoelectric transducer, a thermo-electric transducer, a radio frequency (RF) energy harvesting device, and combinations thereof is described, and forms the basis for the preamble of claim 1. Similar combinations of different energy harvesting devices are also described in US-A-2005/0186994, WO-A-2010/033012, US-A-2009/0174361 and US-A-2008/0054638.

WO-A-2006/072539 discloses a tyre module for recording tyre condition variables. A spring element configured is configured as a rod spring, a torsion spring or a leaf spring which carries a mass at its free end. The spring element transmits acceleration from the mass to a conversion unit. The conversion unit converts displacement energy of the mass and spring element is converted into electric energy.

US-A-2005/0017602 discloses a device which harvests mechanical energy from a rotating shaft. The device comprises a sensor, sensor conditioning circuitry, processing circuitry and a transmitter which are all mounted on the rotating shaft, the device measuring strain in the shaft and provides angular velocity and torque of the shaft. Mechanical energy is harvested by the device by way of coils and permanent magnets, the coils being arranged to rotate with the shaft and the permanent magnets are mounted adjacent the rotating shaft. Electrical energy is induced in the coils as they rotate through the magnetic field of the permanent magnets. A battery or capacitor is connected to the coils for collecting and storing the electrical energy. The processing circuitry includes a microprocessor connected to the sensor, the battery or capacitor, and the transmitter for managing power consumption and for monitoring the amount of stored electrical energy. The microprocessor connects the battery or capacitor to the transmitter when the stored energy exceeds a threshold value.

WO-A-20071127106 describes a radio frequency identification device which generates its power from a passive magneto-strictive electro-active sensor comprising layers of a magneto-strictive material and a ceramic piezo-electric transducer. The ceramic piezoelectric transducer acts as a generator to power the device when in range of the querying transceiver magnetic field above a particular value. The magneto-strictive material stretches, flexes or physically displaces the ceramic in the presence of a magnetic field to generate power for the device. The generated power may be used directly or stored in a battery, capacitor or other power storage device until is exceeds a predetermined level and provides power to a transmitter. The device generates pulses of power with each query which power a radio frequency chip and a long range transmitter.

US-A2009/0256361 discloses an energy harvesting system which includes a rotatable member having an electrically conductive coil mounted thereto. Movement of the rotatable member and coil through a magnetic field induces an electric voltage in the coil.

US-A-4717905 discloses a system for monitoring tyre air pressure in which a pressure sensor in each tyre is remotely energised by radio waves. A loop antenna is concentrically mounted with each sensor for receiving radio waves from and for transmitting electrical energy to a remote location. Each pressure sensor is mounted away from the valve stem and may include a strain gauge mounted on the side wall of the tyre or between the tyre wall and rim.

### Summary of the Invention

It is therefore an object of the present invention to provide an improved micro-power system which harvests energy.

It is another object of the present invention to provide an improved tyre pressure monitoring system.

In accordance with a first aspect of the present invention, there is provided a micro-power system for a tyre pressure management system, the micro-power system comprising a mechanical energy harvester unit; a power management module for receiving power generated by the mechanical energy harvester unit; and a radio frequency energy harvester unit; characterised in that the mechanical energy harvester and the radio frequency energy harvester unit share at least one sensor element.

By combining the mechanical energy harvester and the radio frequency energy harvester, the micro-power device can readily be incorporated into other systems where no external power connections can be implemented. Moreover, such micro-power devices can also be used in environments where it is not possible to utilise other power sources, for example, batteries.

The mechanical energy harvester unit may comprise at least one strain gauge. In one embodiment, each strain gauge comprises a metallic foil formed on a dielectric substrate. In a preferred embodiment, each strain gauge includes an antenna. Furthermore, each strain gauge may include a rectifier.

In accordance with another aspect of the present invention, there is provided a tyre pressure measurement system comprising at least one pressure sensor configured for location within a tyre; a first processor for processing signals output from each pressure sensor; a second processor configured for mounting on a vehicle; at least one communications link between the first processor and the second processor; and a micro-power system as described above.

Certain inventive aspects relating to a micro-power system for harvesting (scavenging) energy from the environment to provide the electrical power required for operating a monitoring sensor device will be described. The micro-power system comprises a harvesting unit and a power management circuit containing an integrated storage element for storing energy from the harvester unit. The harvesting unit may be "flexible", that is, a strain gauge, or a micro-electromechanical system (MEMS) device.

In one aspect all features of the micro-power system, such as, the power generation (harvester/scavenging) unit, energy conversion unit and energy storage, are fully integrated in a single flexible package.

The micro-power system can be a part, but not limited to, of a tyre pressure monitoring system (TPMS), whereby the micro-power system further comprises a sensor unit with at least one sensor for measuring specific parameters, such as, pressure, for example, in a vehicle tyre, acceleration forces, for example, of the vehicle on which the tyre being monitored is located, temperature, strain, for example, material strain, and deformation, for example, material deformation.

The harvesting unit can be configured to generate power mechanically by motion, for example, vehicle tyre rotation, vibration, for example, vehicle tyre vibration during motion, or strain, for example, vehicle tyre deformation during contact with road surface. The micro-power system may also include a radio frequency (RF)-piezoelectric harvester/sensor module as a harvesting unit for generating energy using an external RF power source, for example, an RF beam, in the case where the mechanically generated energy, for example, due to motion, pressure, strain, etc., is not sufficient or absent.

The RF-piezoelectric harvester/sensor module and mechanical harvesting unit may be fabricated as one integrated device or integrated as separate modules in the micro-power system.

The electrodes of the mechanical harvesting module may also be used as an RF antenna configured for harvesting energy from an external RF power source.

The power management module of the micro-power system is configured to converting the energy flow from the harvesting unit into energy suitable for directly powering the load, that is, the sensor.

The harvesting and storage units can be additionally used as an accelerometer measurement system. Vehicle motion and speed are detected by comparing the voltage generated by the harvesting unit with a certain voltage threshold. This eliminates the need for separate additional accelerometer devices.

The micro-power system may further comprise a radio system arranged for wireless communication with an end-user or main frame computer. Additionally, the radio system may communication with a processor on board a vehicle when it is implemented as part of a TPMS.

The communication signal generated by the micro-power system may also serve as a "wake-up" signal to turn on the entire monitoring sensor module, for example, from the moment motion is detected, the micro-power system may send a wake-up signal for activating other components of the module. Alternatively, from the moment RF signals are being generated by an end-user or other component, for example, a processor on board a vehicle, the micro-power system may be activated. This acts as a "wake-up" signal where turning on a vehicle may generate RF signals which can be harvested by the micro-power system to waking-up the harvester/sensor module.

The communication signal strength may also be used for identifying the location of the micro-power system sending the signal, for example, sensor modules are typically placed at different locations, being at a different distances with respect to the main frame computer or end user so that the strength of the signals being received will be different from one another.

### Brief Description of the Drawings

For a better understanding of the present invention, reference will now be made, by way of example only, to the accompanying drawings in which:-
Figure 1 illustrates a first embodiment a tyre pressure monitoring system (TPMS) in accordance with the present invention;
Figure 2a illustrates tyre contact with a road surface where a harvesting unit comprising a strain gauge mounted on a flexible deformable element is utilised;
Figure 2b illustrates a graph of strain against time for the embodiment shown in Figure 2a;
Figure 3a illustrates tyre contact with a road surface where a harvesting unit comprising a micro-electromechanical system (MEMS) device is utilised;
Figure 3b illustrates a graph of acceleration or impact against time for the embodiment shown in Figure 3a;
Figure 4 illustrates a second embodiment of TPMS in accordance with the present invention;
Figure 5 illustrates a third embodiment of a TPMS in accordance with the present invention; and
Figure 6 illustrates an implementation of a harvesting unit in accordance with the present invention.

### Description of the Invention

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes.

It will be understood that the terms "vertical" and "horizontal" are used herein refer to particular orientations of the Figures and these terms are not limitations to the specific embodiments described herein.

Furthermore, the terms "first", "second", "third" and the like in the description, are used for distinguishing between similar elements and not necessarily for describing a sequential or chronological order. The terms are interchangeable under appropriate circumstances and the embodiments of the invention can operate in other sequences than described or illustrated herein.

Moreover, the terms "top", "bottom", "over", "under" and the like in the description are used for descriptive purposes and not necessarily for describing relative positions. The terms so used are interchangeable under appropriate circumstances and the embodiments of the invention described herein can operate in other orientations than described or illustrated herein.

The term "comprising" should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components; or groups thereof. Thus, the scope of the expression "a device comprising means A and B" should not be limited to devices consisting of only components A and B. It means that with respect to the present invention, the only relevant components of the device are A and B.

Energy harvesting is the process of converting unused ambient energy into usable electrical power. Harvesting ambient energy from mechanical vibrations or radio frequency (RF) signals is very attractive for tyre pressure measurement systems (TPMS). Additionally, it is also very important for systems which do not allow battery replacement or wired power coupling. A power management module is needed for converting the highly irregular energy flow from the energy harvester or from the micro-power module into regulated energy suitable for charging a storage device, for example, a lithium (Li) battery or a super-capacitor, or for powering the TPMS electronics directly. A complete TPMS has more functional blocks besides a micro-power module as will be described in more detail below. An acceleration and/or pressure sensor device will capture the tyre movement and pressure information. An analogue-to-digital converter (ADC) and microprocessor or microcontroller is used for transforming these measurements into digital information. A radio module provides communication with external receivers.

In accordance with the present invention, a micro-power system and a method for operating a micro-power system will be described below, the micro-power system being integrated in a monitoring system to provide the electrical power required for operating the monitoring sensor device.

Although the present invention will be described with reference to TPMS, it is not limited to such an application and other applications and implementations are possible.

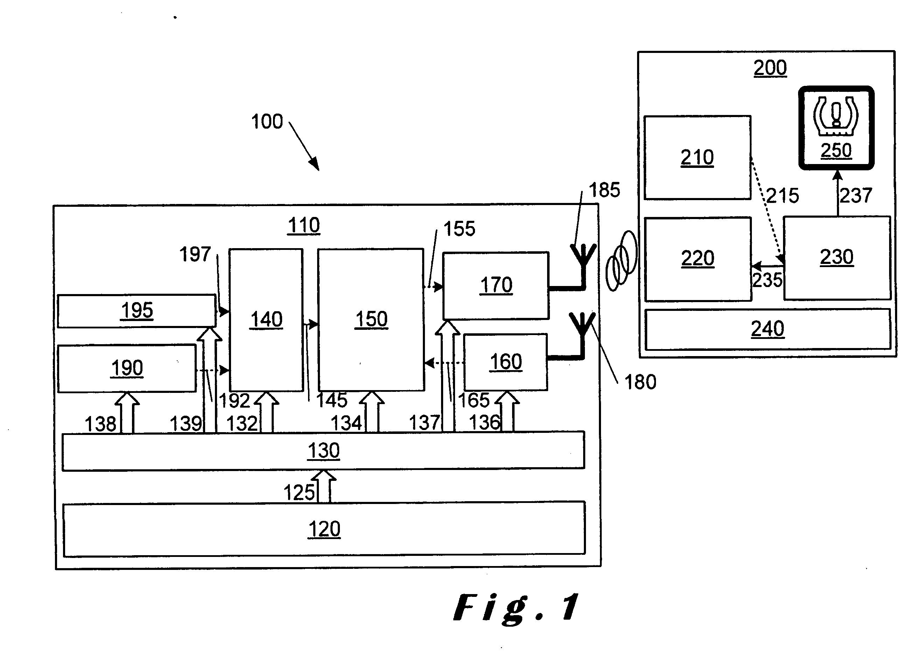

The micro-power system comprises a harvesting unit and a power management circuit containing an integrated storage element for storing energy from the harvesting unit. This is described in more detail below with reference to Figure 1. The harvesting unit may be flexible, that is, a strain gauge, or may comprise a micro-electromechanical system (MEMS) device. The micro-power system is integrated in a single flexible package whereby the harvesting/scavenging unit may be operated using energy derived from electrostatic or piezoelectric systems together with radio frequency (RF) energy.

In one embodiment of a micro-power system, there is a tyre pressure monitoring system (TPMS) used in the automotive industry for monitoring, among other parameters, the vehicle tyre pressure. In this particular field of application, it is of great importance to design a micro-power system not only providing the required system power, but also other functionality, including sensing and "wake-up", that is, activation of the entire monitoring sensor system. In accordance with the present invention, area overhead and power consumption can be reduced thus providing a more integrated solution for a TPMS.

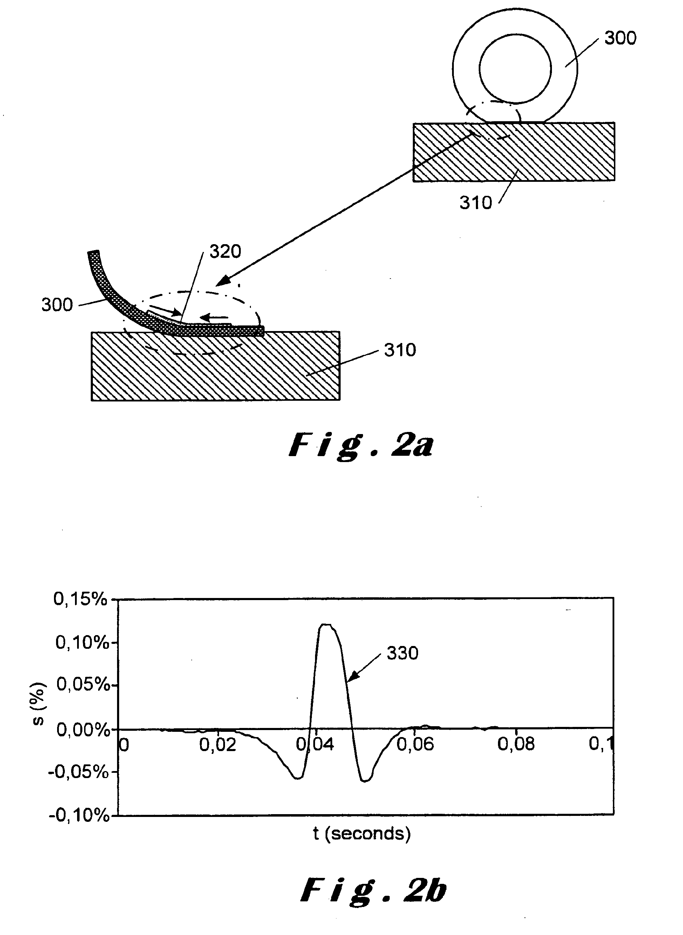

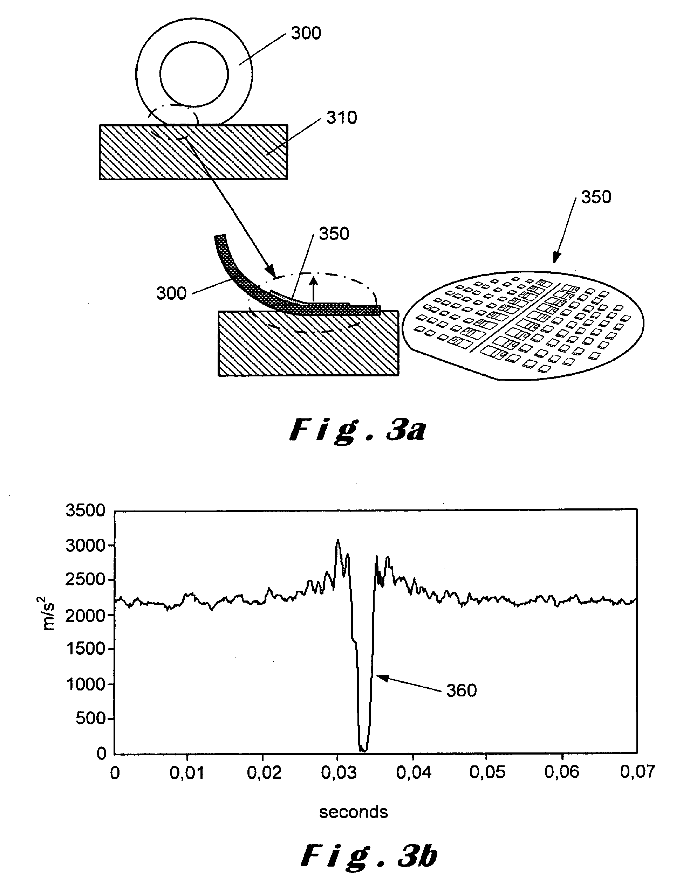

In accordance with the present invention, the micro-power system exhibits the following characteristics:
(i) The micro-power system comprises a vibrational scavenging unit mountable on or inside the tyre. The vibrational scavenging unit may comprise a flexible device operating as a strain gauge and/or a MEMS device operating as an impact gauge. The operation of such devices will be described in more detail below with reference to Figures 2a, 2b, 3a and 3b. During motion of the tyre along a road surface, this micro-power system supplies the entire monitoring system with power. For example, the harvester unit may be a piezoelectric energy harvester. The electrodes of the vibrational energy harvester may also be used as an RF harvester as will be described in more detail below. This micro-power system harvester unit supplies the sensor with the required power at low-speeds and/or immediately after the engine is switched on.
(ii) The electrodes of the vibrational energy harvester may additionally be used as antenna. In this case, the need for external antenna component is eliminated which contributes to reduction in the system volume.
(iii) In one embodiment, the signal generated by the self-powered sensor may be used to determine the vehicle speed. This contributes to a reduction of the TPMS system power consumption and eliminates the need for separate acceleration measuring sensors, for example, accelerometers.
(iv) In another embodiment, the signal generated by the self-powered sensor system itself acts as a "wake-up" signal for the entire TPMS module. This contributes to a reduction of the TPMS power consumption and eliminates the need for external "wake-up" units, for example, low-frequency (LF) wake-up unit.
(v) The signal generated by the self-powered sensor for determining the vehicle speed may be used in combination with other systems existing in the vehicle to determine the tyre localisation, that is, the identification of each tyre on the vehicle. This contributes to a reduction of the TPMS power consumption and eliminates the need for external sensors, for example, RF identification (RFID) sensors and/or LF interrogators.

In Figure 1, a first embodiment of a TPMS 100 in accordance with the present invention is shown. The TPMS 100 comprises an energy harvesting module 110 which harvest power due to contact between the tyre (not shown) and a road surface (also not shown). The energy harvesting module 110 includes an energy harvesting module 120, a power management module 130, an analog-to-digital converter (ADC) 140, a microcontroller unit 150, a low frequency (LF) receiver 160 and an RF transmitter 170. The LF receiver 160 has an associated antenna element 180, and the RF transmitter 170 has an associated antenna element 185. In this embodiment, a pressure sensor 190 and an accelerometer 195 are also associated with the energy harvesting module 110.

The pressure sensor 190 and the accelerometer 195, the ADC 140, the microcontroller 150 and LF receiver 160 are connected to a power management module 130 which is powered by the micro-power module 120. The microcontroller unit 150 includes a memory (not shown) and other firmware (also not shown) necessary for operation of the energy harvesting module 110. The energy harvesting module 110 may be implemented as an integrated circuit (IC) including the various elements described above.

The TPMS 100 also includes a computer board 200 located at a suitable position within a vehicle whose tyres are being monitored. The computer board 200 includes a RF receiver 210, a LF transmitter 220, a microcontroller unit 230, a power management module 240 and a display 250. The RF receiver 210 and LF transmitter 220 each has an associated antenna (not shown). The computer board 200 may form part of a management control system (not shown) for the vehicle.

As shown in Figure 1, signals are transmitted wirelessly between the RF transmitter 170 and RF receiver 210 and between the LF transmitter 220 and LF receiver 160 using respective ones of the antennas 180, 185 in the energy harvesting module 110 and the antennas associated with the computer board 200 (not shown).

When the vehicle is stationary and the tyre in which the energy harvesting module 110 is located is not moving, the TPMS 100 becomes non-operational, for example, goes into a "sleep mode". The LF transmitter 220 transmits a "wake-up" signal to the energy harvesting module 110 via the LF receiver 160 when the engine of the vehicle is switched on, so that it is effectively switched between the "sleep mode" and an "operational mode". The RF transmitter 170 in the energy harvesting module 110 transmits energy and data relating to the power generated by the energy harvesting unit 120 to the computer board 200 via the RF receiver 210 when in the energy harvesting module 110 is in its "operational mode".

As shown, the energy harvesting module 120 provides power to the power management module 130 as indicated by power line 125. The power management module 130, in turn, supplies power to the ADC 140, the microcontroller 150, the LF receiver 160, the RF transmitter 170, the pressure sensor 190 and the accelerometer 195 by means of power lines 132, 134, 136, 137, 138, 139.

Data is transferred from the energy harvesting module 120 to the ADC 140 using a data transfer line (not shown). The data is converted into digital form and is supplied to the microcontroller 150 on data line 145. The microcontroller 150 provides data to the RF transmitter 170 for transmission to the computer board 200 along data line 155, and receives data from the LF receiver 160 along data line 165.

In addition, data is also transferred from the pressure sensor 190 and the accelerometer 195 to the ADC 140 via respective data lines 192, 197. The converted pressure sensor data and accelerometer data is passed to the microcontroller 150 for processing, for transmission to the computer board 200 and for storage in the memory (not shown).

In the computer board, the power management module 240 provides power to each of the RF receiver 210, the LF transmitter 220, the microcontroller 230 and the display 250 (not shown). In addition, data is transferred from the RF receiver 210 to the microcontroller 230 along data line 215, and from the microcontroller 230 to the LF transmitter 220 and display 250 along respective data lines 235, 237 as shown.

The micro-power system or energy harvesting module of the present invention is integrated into a single package, which includes a power generation circuit, a unit for energy conversion and storage. As a result, the micro-power system is more robust, and, thus more reliable, due to its resistance to high temperatures and external forces, such as, acceleration, that can be generated in the specific location where the monitoring system is placed. In the case of a TPMS system as described above with reference to Figure 1, reliability is considered as one of the important specifications of the device.

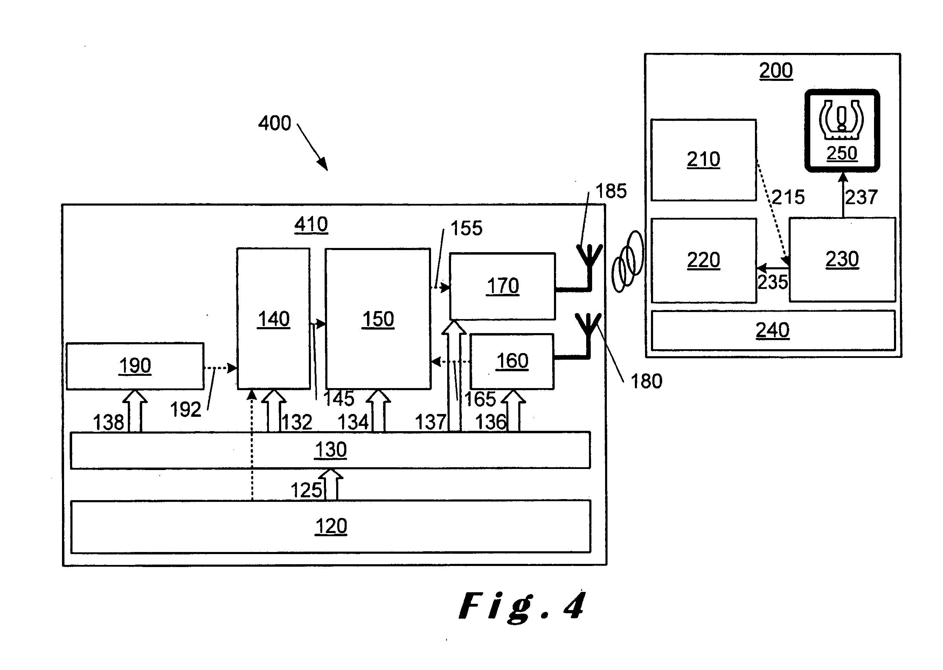

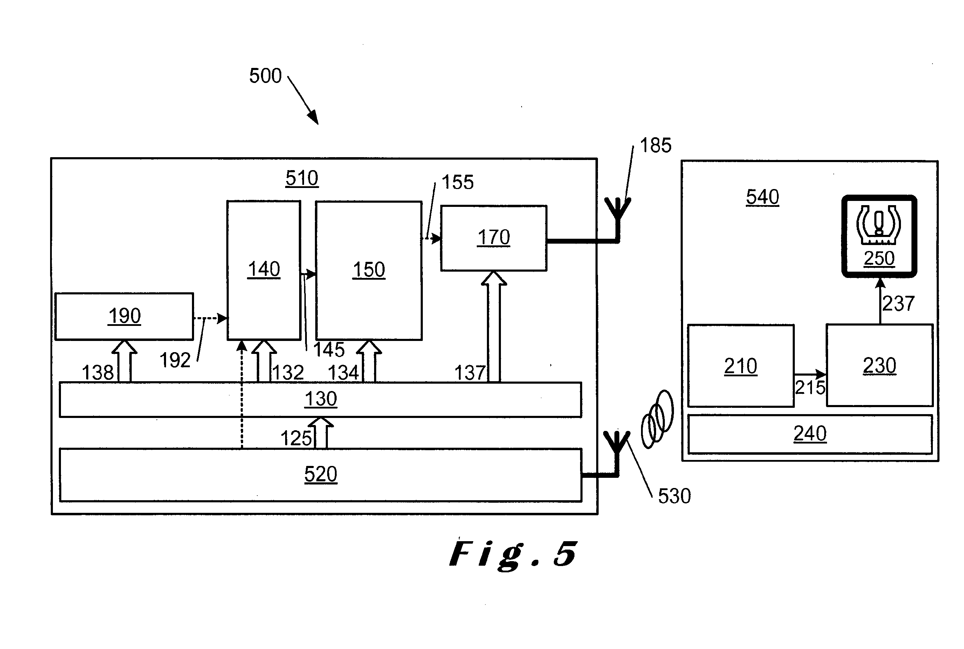

In one embodiment of the system shown in Figure 1, once the vehicle speed is above, for example, 20km/h, 40km/h or any other suitable speed, a signal may be transmitted from the microcontroller 230 on the computer board 200 through the LF communication link, namely, LF transmitter 220 and LF receiver 160, to the microcontroller 150 on the TPMS IC to switch the system from a "sleep mode" to an "operational mode". In the operational mode, the TPMS IC measures tyre pressure information with the pressure sensor 190 at periodic intervals, for example, every 5 or 10 seconds or any other suitable time period. As described above, these measurements are processed by the ADC 140 and microcontroller 150 before transmitting the data wirelessly to the computer board 200. The data may be transmitted at regular intervals, for example, every 1 to 5 minutes or any other period of time. This functionality is maintained in the systems that will be described in more detail below with reference to Figures 4 and 5.

In one embodiment, the micro-power system can be used as part of a TPMS further having a sensor unit with at least one sensor for measuring at least temperature, pressure or acceleration/forces of the tyre. In this case, the energy harvesting unit generates power preferably by mechanical motion, that is, according to a rotation of the tyre and RF power generated by an external RF power source. The difference between the strain and impact signals on a MEMS device or flexible vibrational harvesting means, respectively, is highlighted in Figures 2a, 2b, 3a and 3b and is described in more detail below. Furthermore, due to the tyre vibrations during motion, the vibrational harvester means offers the best harvester solution for integration in a battery-less TPMS during motion of the vehicle. Further, for no-motion situations or when the motion is too low to generate sufficient energy but still sensing information is needed, an RF beam can be used to power the integrated RF-piezoelectric harvester/sensor module.

In Figure 2a, a schematic illustration of a tyre 300 on a road surface 310 is shown. In this embodiment, energy harvesting is achieved using strain measurements. As shown, as the tyre 300 contacts the road surface 310, it deforms. This deformation is detected by the micro-power system, in particular a TPMS, in accordance with the present invention. An energy harvesting unit 320 in the form of a piezoelectric strain gauge is located on the inside of the tread of the tyre as shown. Every time the tyre contacts the road, that is, once per revolution of the tyre, the piezoelectric strain gauge is deformed, that is, increases in length and generates a strain pulse as shown in Figure 2b.

In Figure 2b, a graph of strain (in percentage (%) increase and % decrease) against time is shown. A strain pulse 330 is generated each time the tyre and its associated piezoelectric strain gauge are deformed. Naturally, as the tyre rotates, the portion of the tyre associated with the strain gauge contacts the road surface each revolution of the tyre and therefore a series of strain pulses is generated for the energy harvesting.

Although the strain pulse 330 only has a short duration, typically 40ms, for each revolution, it is sufficient to generate micro-power energy to power a TPMS. Moreover, although only one piezoelectric strain gauge is shown in Figure 2a, it will be appreciated that a plurality of such piezoelectric strain gauges can be provided across the width of the tread of the tyre and/or on the inside of the sidewall of the tyre (not shown).

In Figure 3a, the tyre 300 is again shown in contact with the road surface 310. In this case, impact of the tyre 300 on the road surface 310 is measured. In a similar way to that described above with reference to Figure 2a, an impact element 350 is mounted within the tyre 310. The impact element 350 generates an impact pulse 360 (Figure 3b) each time the portion of the tyre 300 on which the element 350 attached makes contact with the road surface 310. The impact element 350 comprises a plurality of resonating elements that resonate in response to each impact pulse 360 and therefore creates resonance in the impact element 350. This resonance generates the power for the micro-power system.

In Figure 3b, a graph of acceleration (in m/s²) against time is shown. As shown, impact pulse 360 typically has a duration of few milliseconds but is sufficient to generate micro-power energy to power a TPMS.

Both the piezoelectric strain gauge forming the energy harvesting unit 320 and the impact element 350 are considered to be vibration-based harvesting units.

It will be appreciated that the RF and energy harvesting units may be fabricated and integrated as separate systems. However, both the RF and energy harvesting units may be fabricated in a single device where the vibration-based harvester electrodes can also be used as an RF harvester.

The power management circuit will convert the energy flow from the harvesting unit in energy suitable to directly power the load. In this case, the energy harvesting and storage units can be used as an accelerometer measurement system as will be described below with reference to Figure 4. The vehicle motion and speed may be detected by comparing the voltage generated by the energy harvesting unit with a certain voltage threshold value. As a result, extra accelerometer components are not required because detection of the motion is achieved through power generation. This advantageously contributes to a much lower power consumption, smaller size and lower weight of the complete TPMS.

In Figure 4, a second embodiment of a TPMS 400 is shown which is similar to the TPMS 100 described with reference to Figure 1. Components which have previously been described with reference to Figure 1 have the same reference numerals and will not be described again in detail. The difference between the TPMS 400 shown in Figure 4 and the TPMS 100 shown in Figure 1 is that no accelerometer is needed in energy harvesting module 410. As described above, vehicle motion and speed can be determined and used as a basis to determine acceleration of the vehicle, for example, by measuring the change in vehicle speed with respect to time. As described above with reference to Figure 1, data provided from the energy harvesting unit 120 is passed to the ADC 140 where it is converted before being passed the microcontroller 150. The microcontroller 150 uses the data supplied together with a clock signal generated by an internal clock (not shown) to determine the acceleration of the tyre and hence the vehicle itself. This determined acceleration data is then passed to the RF transmitter 170 for transmission to the microcontroller 230 in the computer board 200 via RF antenna 185 and RF receiver 210.

The energy harvesting module and storage units may also be used as a "wake-up" system when the vehicle is in motion as described in more detail below with reference to Figure 5. A "wake-up" system can be implemented by detecting the vehicle motion and comparing the voltage generated by the energy harvesting unit with a certain voltage threshold. As a result, an external wake-up unit is not required because wake-up is done through the power generation. Again, this contributes to a much lower power consumption, smaller size and lower weight of the complete TPMS.

In Figure 5, a third embodiment of a TPMS 500 is shown. The TPMS 500 is similar to the TPMS 400 and components that have previously been described with reference to the TPMS 400 of Figure 4 have the same reference numerals and are not described again here. As described above, "wake-up" is determined using the energy harvesting unit 120 which generates a voltage signal as soon as the vehicle starts moving and the TPMS 500 can then be powered up accordingly. The TPMS 500 comprises an energy harvesting module 510 which has no LF receiver 160. In addition, a computer board 540 without the LF transmitter 220 is also included.

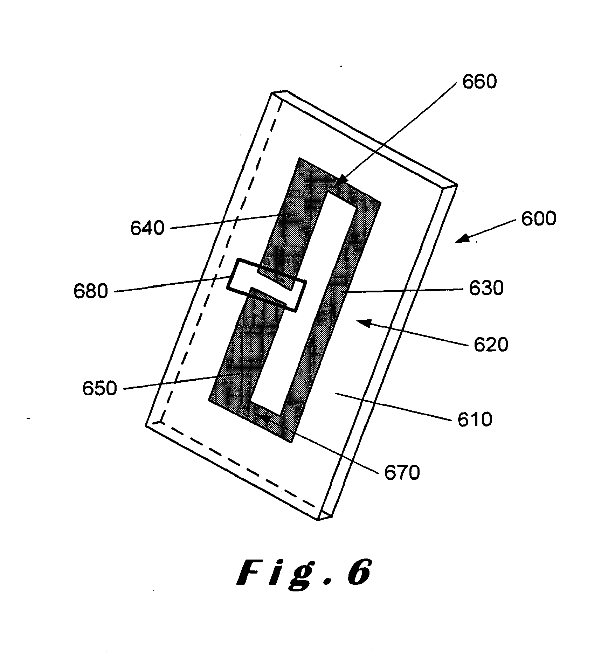

In this embodiment, the energy harvesting module 510 has an energy harvesting unit 520 which includes an antenna 530 that operates both for vibrational energy harvesting and for RF energy harvesting. Such an antenna is described in more detail below with reference to Figure 6. Data transfer from the energy harvesting module 510 to the computer board 540 may still be made using an RF communication link provided by RF transmitter 170 and RF receiver 210.

However, if a harvesting device as described with reference to Figure 6 below is utilised, antenna 185 becomes redundant and antenna 530 is used for the RF communication link with the RF receiver 210. In this case, processed data passed to RF transmitter 170 for transmission to the computer board 540 is directed to the antenna 530 in the energy harvesting unit 520 over a data line (not shown).

The energy harvesting and storage units may also be used for tyre localisation when the vehicle is in motion. The tyre localisation may be performed by combining voltage generation data, provided by the energy harvesting unit for waking-up the TPMS system and for determining the vehicle speed, with the information relating to wireless signal strength received from other systems in the vehicle. By using the present invention this way, a separate tyre localisation unit is not required contributing to a lower power consumption, smaller size and lower weight of the complete TPMS.

In addition, the TPMS of the present invention has the additional benefit of being able to provide high data communication rates representative of the tyre status, the temperature and so on, which is used as input for active safety systems in the vehicle with which the TPMS is associated. For the application in TPMS, the piezoelectric-RF FlexPower system generates energy for the electronics during the complete life-time of a tyre. The energy delivered by the energy harvesting unit enables also more functionality, for example, faster pressure sampling, calibration, data communication and faster motion detection. This information together with the tyre identification may also be used as input for controlling other systems as anti-locking braking systems (ABS) or electronic speed control (ESC).

An implementation of an RF harvesting device 600 is shown in Figure 6. The device 600 comprises a dielectric base 610 on which is formed an electrode element 620. The electrode element 620 comprises a metallic foil which operates as both an antenna and a rectifier for in-tyre applications. The electrode element 620 comprises a substantially rectangular element with a portion removed so that the dielectric base 610 is present between a long arm portion 630 and two shorter arm portions 640, 650 as shown. The long arm portion 630 is connected to each of the two shorter arm portions 640, 650 by transverse arms 660, 670. A gap 680 provided between the two shorter arm portions 640, 650 acts as both the antenna and the rectifier, for example, a diode bridge. In addition, the electrode element 620 may operate as a sensor which again removes the need for an external sensor component thereby reducing system volume and cost. In use, the RF harvesting device 600 may be mounted on the inner liner of the tread of the tyre or on a side wall.

The foregoing description details certain embodiments of the invention. It will be appreciated, however, that no matter how detailed the foregoing appears in text, the invention may be practised in many ways. It should be noted that the use of particular terminology when describing certain features or aspects of the invention should not be taken to imply that the terminology is being re-defined herein to be restricted to including any specific characteristics of the features or aspects of the invention with which that terminology is associated.

## Claims

1. A micro-power system for a tyre pressure measurement system, the micro-power system comprising a mechanical energy harvester unit (120; 520); a power management module (130) for receiving power generated by the mechanical energy harvester unit (120; 520); and a radio frequency energy harvester unit; **characterised in that** the mechanical energy harvester and the radio frequency energy harvester unit share at least one sensor element (600).

2. A micro-power system according to claim 1, wherein the mechanical energy harvester unit (320) comprises at least one strain gauge (600).

3. A micro-power system according to claim 2, wherein each strain gauge (600) comprises a metallic foil (620) formed on a dielectric substrate (610).

4. A micro-power system according to claim 3, wherein each strain gauge (600) includes an antenna (680).

5. A micro-power system according to claim 3 or 4, wherein each strain gauge (600) includes a rectifier (680).

6. A tyre pressure measurement system (100; 400; 500) comprising at least one pressure sensor (190) configured for location within a tyre (300); a first processor (110) for processing signals output from each pressure sensor; a second processor (200) configured for mounting on a vehicle; at least one communications link (180, 185, 210, 220) between the first processor (110) and the second processor (200); and a micro-power system according to any one of the preceding claims.

7. A tyre pressure measurement system according to claim 6, wherein the second processor (200) comprises part of a computer board.

8. A tyre pressure measurement system according to claim 6 or 7, wherein the communications link comprises a radio frequency link (185, 210), and the first processor (110; 410; 510) comprise an radio frequency transmitter (170; 520) for transmitting data indicative of tyre pressure measurements, the second processor (200; 540) comprising a radio frequency receiver (210) for receiving the data from the first processor (110; 410; 510) and for displaying the received data.

9. A tyre pressure measurement system according to any one of claims 6 to 8, wherein the communications link comprises a low frequency link (160, 220) for transmitting control signals from the second processor (200; 540) to the first processor (110; 410; 510).

## Patentansprüche

1. Mikro-Stromversorgungssystem für ein Reifendruck-Messsystem, wobei das Mikro-Stromversorgungssystem eine mechanische Energiegewinnungseinheit (120; 520) umfasst, ein Leistungsverwaltungsmodul (130) zum Empfangen von Leistung, die von der mechanischen Energiegewinnungseinheit (120; 520) erzeugt wird, und eine Hochfrequenz-Energiegewinnungseinheit, **dadurch gekennzeichnet, dass** sich die mechanische Energiegewinnungseinheit und die Hochfrequenz-Energiegewinnungseinheit mindestens ein Sensorelement (600) teilen.

2. Mikro-Stromversorgungssystem nach Anspruch 1, wobei die mechanische Energiegewinnungseinheit (320) mindestens einen Dehnungsmessstreifen (600) umfasst.

3. Mikro-Stromversorgungssystem nach Anspruch 2, wobei jeder Dehnungsmessstreifen (600) eine Metallfolie (620) umfasst, die auf einem dielektrischen Substrat (610) ausgebildet ist.

4. Mikro-Stromversorgungssystem nach Anspruch 3, wobei jeder Dehnungsmessstreifen (600) eine Antenne (680) aufweist.

5. Mikro-Stromversorgungssystem nach Anspruch 3 oder 4, wobei jeder Dehnungsmessstreifen (600) einen Gleichrichter (680) aufweist.

6. Reifendruck-Messsystem (100; 400; 500), das mindestens einen Drucksensor (190) umfasst, der zum Unterbringen innerhalb eines Reifens (300) ausgelegt ist, einen ersten Prozessor (110) zum Verarbeiten von Ausgangssignalen aus jedem Drucksensor, einen zweiten Prozessor (200), der zur Montage auf einem Fahrzeug ausgelegt ist, mindestens eine Kommunikationsverbindung (180, 185, 210, 220) zwischen dem ersten Prozessor (110) und dem zweiten Prozessor (200), und ein Mikro-Stromversorgungssystem nach einem der vorhergehenden Ansprüche.

7. Reifendruck-Messsystem nach Anspruch 6, wobei der zweite Prozessor (200) einen Teil einer Computerplatine umfasst.

8. Reifendruck-Messsystem nach Anspruch 6 oder 7, wobei die Kommunikationsverbindung eine Hochfrequenzverbindung (185, 210) umfasst, und der erste Prozessor (110; 410; 510) einen Hochfrequenzsender (170; 520) zum Übertragen von Daten umfasst, die Reifendruckmessungen anzeigen, wobei der zweite Prozessor (200; 540) einen Hochfrequenzsender (210) zum Empfangen der Daten von dem ersten Prozessor (110; 410; 510) und zum Anzeigen der empfangenen Daten umfasst.

9. Reifendruck-Messsystem nach einem der Ansprüche 6 bis 8, wobei die Kommunikationsverbindung, eine Niederfrequenzverbindung (160, 220) zum Übertragen von Steuersignalen von dem zweiten Prozessor (200; 540) zu dem ersten Prozessor (110; 410; 510) umfasst.

## Revendications

1. Microsystème d'alimentation pour un système de mesure de la pression des pneus, le microsystème d'alimentation comprenant une unité de récupération d'énergie mécanique (120 ; 520), un module de gestion de l'énergie (130) pour recevoir l'énergie générée par l'unité de récupération d'énergie mécanique (120 ; 520) et une unité de récupération d'énergie de radiofréquence, **caractérisé en ce que** l'unité de récupération d'énergie mécanique et l'unité de récupération d'énergie de radiofréquence partagent au moins un élément capteur (600).

2. Microsystème selon la revendication 1, dans lequel l'unité de récupération d'énergie mécanique (320) comprend au moins une jauge extensométrique (600).

3. Microsystème selon la revendication 2, dans lequel chaque jauge extensométrique (600) comprend une feuille métallique (620) formée sur un substrat diélectrique (610).

4. Microsystème selon la revendication 3, dans lequel chaque jauge extensométrique (600) comprend une antenne (680).

5. Microsystème selon la revendication 3 ou 4, dans lequel chaque jauge extensométrique (600) comprend un redresseur (680).

6. Système de mesure de la pression des pneus (100 ; 400 ; 500) comprenant au moins un capteur de pression (190) configuré pour être placé dans un pneu (300), un premier processeur (110) pour traiter des signaux produits par chaque capteur de pression, un deuxième processeur (200) configuré pour être monté sur un véhicule, au moins une liaison de communication (180, 185, 210, 220) entre le premier processeur (110) et le deuxième processeur (200) et un microsystème d'alimentation selon l'une quelconque des revendications précédentes.

7. Système de mesure de la pression des pneus selon la revendication 6, dans lequel le deuxième processeur (200) comprend une partie d'une carte d'ordinateur.

8. Système de mesure de la pression des pneus selon la revendication 6 ou 7, dans lequel la liaison de communication comprend une liaison radiofréquence (185, 210) et le premier processeur (110 ; 410 ; 510) comprend un émetteur de radiofréquence (170 ; 520) pour émettre des données indicatrices de mesures de pression des pneus, le deuxième processeur (200 ; 540) comprenant un récepteur de radiofréquence (210) pour recevoir les données du premier processeur (110 ; 410 ; 510) et pour afficher les données reçues.

9. Système de mesure de la pression des pneus selon l'une quelconque des revendications 6 à 8, dans lequel la liaison de communication comprend une liaison basse fréquence (160 ; 220) pour transmettre des signaux de contrôle du deuxième processeur (200 ; 540) au premier processeur (110 ; 410 ; 510).
